# EUROPÄISCHE PATENTSCHRIFT

(11) **EP 3 494 632 B1**
(45) Veröffentlichungstag und Bekanntmachung des Hinweises auf die Patenterteilung: **01.11.2023**
(21) Anmeldenummer: 17777252.2
(22) Anmeldetag: 28.09.2017
(51) Int. Cl.: H02K 41/03, H02K 9/22, H02K 9/197

(54) **MOTORKOMPONENTE, PRIMÄRTEIL UND LINEARMOTOR**
MOTOR COMPONENT, PRIMARY PART AND LINEAR MOTOR
COMPOSANT MOTEUR, ÉLÉMENT PRIMAIRE ET MOTEUR LINÉAIRE

(30) Priorität: 23.11.2016 DE 102016122612
(43) Veröffentlichungstag der Anmeldung: 12.06.2019
(73) Patentinhaber: Kessler Energy GmbH, 88422 Bad Buchau (DE)
(72) Erfinder: TROLLIET, Patrick, 88361 Altshausen (DE); SINNER, Markus, 88079 Eriskirch (DE); ZEUMER, Christoph, 88213 Ravensburg (DE); BORST, Daniel, 88515 Andelfingen (DE); MENZ, Markus, 88422 Bad Buchau (DE)
(74) Vertreter: Otten, Roth, Dobler & Partner mbB Patentanwälte
(86) Internationale Anmeldenummer: PCT/EP2017/074705
(87) Internationale Veröffentlichungsnummer: WO 2018/095618

(56) Entgegenhaltungen:
- WO-A2-2008/071147
- DE-T5-112009 000 359
- DE-T5-112009 000 359
- US-A1- 2012 170 016
- US-B1- 6 278 203
- US-B1- 6 339 269

## Beschreibung

Die Erfindung betrifft eine Motorkomponente für einen Linearmotor, insbesondere ein Primärteil bzw. einen Ständer nach dem Oberbegriff des Anspruchs 1, ein Primärteil nach dem Oberbegriff des Anspruchs 14 sowie einen Linearmotor nach dem Oberbegriff des Anspruchs 15.

Für Linearmotoren werden im Stand der Technik verschiedene Kühlungen vorgeschlagen. Aus der DE 10 2007 020 057 A1 ist zum Beispiel ein Linearmotor mit integrierter Kühlung bekannt, wobei die Kühlung durch Kühlkanäle erreicht wird, die in das mit Nuten für die Wicklungen versehene Blechpaket eingearbeitet sind, d.h. die entsprechenden Einzelbleche des Blechpakets sind hier so ausgebildet, dass diese im zusammengefügten Zustand die entsprechenden Kühlkanäle ausbilden.

Das Dokument DE 11 2009 000359 offenbart eine entsprechende Motorkomponente.

Aufgabe der Erfindung ist es, eine Motorkomponente für einen Linearmotor vorschlagen zu können, die eine zuverlässige Kühlung bereitstellen kann und dennoch kostengünstig herstellbar ist.

Die Aufgabe wird, ausgehend von einer Motorkomponente, einem Primärteil bzw. einem Linearmotor der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Dementsprechend umfasst die erfindungsgemäße Motorkomponente für einen Linearmotor zunächst ein Blechpaket und einen Kühlkörper. Bei einer derartigen Motorkomponente kann es sich insbesondere um ein Primärtal bzw. ein Ständer handeln. Dieses Primärteil umfasst weiterhin Wicklungen und/oder Permanentmagneten zur Ausbildung eines Magnetfeldes, mit dem schließlich ein bewegliches Teil des Linearmotors angetrieben wird, welches etwa in Form eines Sekundärteils vorliegt.

Ein Blechpaket besteht in der Regel aus zusammengeführten Einzelblechen, die gegeneinander elektrisch isoliert sind, um Wirbelströme zu vermeiden, die induktiv darin erzeugt werden könnten, wenn ein entsprechender Körper, der die Feldlinien leiten und das magnetische Feld verstärken soll, aus einem ferromagnetischen Vollmaterial ausgebildet wäre. Die Spulen bzw. Wicklungen und oder entsprechende Permanentmagneten sind in Nuten im Blechpaket angeordnet.

Die Erfindung zeichnet sich dadurch aus, dass der Kühlkörper mit dem Blechpaket verbunden und parallel zur Anordnung der Nuten angeordnet ist, wobei das Blechpaket und der Kühlkörper miteinander verklebt sind. Durch die Anordnung in einer Ebene parallel zu den Nuten wird ermöglicht, dass der Kühlkörper nahe an den jeweiligen Wicklungen angeordnet sein kann, gegebenenfalls auch mit konstantem bzw. im Wesentlichen gleich bleibenden Abstand zu den Wicklungen, sodass eine homogene Kühlung ermöglicht wird. Darüber hinaus kann eine besonders kostengünstige Fertigung erzielt werden, weil die beiden Teile, das Blechpaket und der Kühlkörper als separate Teile gefertigt werden können, sodass entsprechende Kühlkanäle nicht in dem aus Einzelblechen bestehenden Material gefertigt werden müssen, was vergleichsweise aufwendig ist. Zum anderen sind aufgrund dieser vorgeschlagenen Bauweise die Materialien auf einfache Weise, aber dennoch ohne Luftspalte oder sonstige, die Wärmeleitung behindernde Umstände miteinander verbindbar.

Diese Verbindung zwischen Blechpaket und Kühlkörper wird überraschenderweise durch Verkleben ermöglicht, wobei das Verkleben insbesondere mit einer sehr dünnen Klebeschicht erfolgt. Zum einen kann dadurch der Abstand zwischen Blechpaket und Kühlkörper sehr gering ausfallen, was eine gute Wärmeabfuhr begünstigt, zum anderen wird dadurch ermöglicht, dass eine sehr stabile Verbindung zwischen Blechpaket und Kühlkörper erreicht wird. In überraschender Weise kann dieser auch sehr hohen Kräften standhalten, die im Betrieb im Allgemeinen auf ein Aktivteil eines Motors wirken. Außerdem können bei dem vorgeschlagenen Aufbau Luftspalte zwischen Kühlkörper Blechpaket vermieden werden. Obgleich grundsätzlich einige Klebstoffe durchaus auch schlechte Wärmeleiteigenschaften aufweisen können, erweist es sich im vorliegenden Fall als vorteilhaft, dass die Klebeschicht selbst nur sehr dünn ausgebildet werden kann und daher der durch sie verursachte Wärmewiderstand eher gering ausfällt.

Um eine möglichst große Kontaktfläche zwischen Blechpaket und Kühlkörper zu erreichen, kann zumindest eine von beiden, oder es können beide, jeweils als Platte ausgebildet sein, sodass Kühlkörperkanäle und in den Nuten des Blechpakets angeordnete Wicklungen als Wärmequelle in parallelen Ebenen verlaufen können. Ferner wird auch ein geringer Abstand der Kanäle und der Wicklungen zueinander ermöglicht, sodass insgesamt eine gute und gleichmäßige Wärmeabfuhr ermöglicht wird.

Erfindungsgemäß sind Blechpaket und Kühlkörper in Sandwich-Bauweise miteinander verbunden. Neben den kurzen Abständen zwischen wärmeerzeugenden Wicklungen und wärmeabführenden Kühlkanälen wird darüber hinaus ermöglicht, dass die mechanische Steifigkeit erhöht wird, da die entsprechenden "Sandwich-Schichten" sich gegenseitig stabilisieren und für ein höheres Biegemoment bzw. Flächenträgheitsmoment sorgen. Erfindungsgemäß bieten sich weitere Vorteile gegenüber einem herkömmlichen Aufbau nach dem Stand der Technik, der oftmals einen Vollverguss des Primärteils vorsieht; gemäß dem Stand der Technik hat es sich nämlich als nachteilig erwiesen, dass oftmals in dem Vergussmaterial Lufteinschlüsse zu finden sind.

Das Blechpaket kann insbesondere bei einer Ausführungsvariante der Erfindung als Backlackblechpaket ausgebildet sein, um die mechanische Steifigkeit zu erhöhen. Zudem kann in den Nuten wenigstens eine Backlackwicklung angeordnet sein, welche vergossen ist, sodass auch hierdurch die mechanische Steifigkeit erhöht werden kann. Darüber hinaus ist es bei der Ausführungsform denkbar, dass anstelle von mit Backlack beschichtetem Draht auch konventionell isolierter Wickeldraht verwendet wird. Bei einem bevorzugten Ausführungsbeispiel sind orthozyklisch gewickelte Backlackspulen als Wicklungen vorgesehen. Im Übrigen wird oftmals zwar Runddraht verwendet, der also einen runden Querschnitt aufweist; es kann aber grundsätzlich zum Beispiel auch ein Vierkantdraht eingesetzt werden. Der Querschnitt kann insbesondere eine Rolle spielen, wenn es darum geht, eine möglichst dichte Wicklungspackung zu erreichen. Durch möglichst dicht gepackte Wicklungen können bei möglichst geringem Platzbedarf möglichst hohe Felder erzeugt werden, wodurch die Leistung des Motors gesteigert werden kann.

Wie bereits oben erwähnt, weist der Kühlkörper erfindungsgemäß wenigstens einen Kanal zur Leitung von Kühlflüssigkeit auf. Als Kühlflüssigkeit kann beispielsweise Wasser verwendet werden. Ein derartiger Kühlkanal kann der Ausführungsbeispiel der Erfindung in vorteilhafter Weise so angeordnet werden, dass er möglichst gleichmäßig und dicht die Fläche des Kühlkörpers, die parallel zur Ebene liegt, in der die Nuten angeordnet sind, durchsetzen, sodass eine möglichst einheitliche und gleichmäßige Wärmeabfuhr erreicht werden kann. Beispielsweise kann ein solcher Kühlkanal in einer Platte einen mäandrierenden Verlauf aufweisen. Denkbar ist auch, dass mehrere Kühlkanäle die Platte durchsetzen.

Insbesondere dann, wenn der entsprechende Kühlkörper nicht auf geradem Weg von Kühlkanälen durchsetzt wird, ist es vorteilhaft, entsprechende Kühlkanäle in die Platte zum Beispiel hinein zu Fräsen, insbesondere parallel zu der Ebene, in der die Noten angeordnet sind. Um die Kühlkanäle wiederum dicht abzuschließen, keinen solchen Fall ein Deckel vorgesehen sein, der auf der Seite der Platte bzw. des Kühlkörpers befestigt wird, auf der sich die offenen Abschnitte der Kühlkanäle befinden. Der Deckel kann kostengünstig als Einzelteil gefertigt werden.

Um Blechpaket und Kühlkörper miteinander zu verbinden, wird vorzugsweise ein temperaturbeständiger Kleber verwendet, da zum Teil im Betrieb des Motors relativ hohe Temperaturen erreicht werden können und es gerade dann notwendig ist, dass dennoch ein guter mechanischer Zusammenhalt zwischen Kühlkörper und Blechpaket vorhanden ist. Aus diesem Grunde können zum Beispiel verschiedene temperaturbeständige Kleber eingesetzt werden, insbesondere ein Zweikomponentenkleber auf Epoxydharzbasis. Um eine stabile Schicht, die thermisch einen geringen Widerstand bedeutet, herzustellen, kann insbesondere eine Klebeschicht mit einer Dicke von maximal 0,25 mm vorgesehen sein.

Zur guten Abfuhr von Wärme und um gleichzeitig ein vergleichbar geringes Gewicht der Motorkomponente zu erhalten, ist der Kühlkörper erfindungsgemäß aus Aluminium gefertigt. Darüber hinaus ist dieses Material vergleichsweise kostengünstig.

Im Zusammenhang mit einer Ausführungsform, bei der die Kühlkanäle in den Kühlkörper eingeschränkt sind, wurde bereits erläutert, dass dieser offene Bereich der Kühlkanäle abgedeckt werden muss, was zum Beispiel mithilfe eines Deckels geschehen kann. Vor allem dadurch, dass der Kühlkörper selbst aus Aluminium gefertigt ist, ist es vorteilhaft, dass der Deckel ebenfalls aus Aluminium gefertigt ist, da so Deckel und Kühlkörper bei Erwärmung den gleichen oder zumindest einen sehr ähnlichen Wärmeausdehnungskoeffizienten aufweisen und sich dementsprechend beide bei gleicher Erwärmung auch gleich verhalten und es nicht zu mechanischen Spannungen kommt. Ein Deckel stellt eine kostengünstige Variante dar, um die Gesamtheit der Kühlkanäle abzudecken und zu verschließen.

Wenn die Kühlkanäle allerdings von einer Flüssigkeit durchströmt werden, auf die ein hoher Druck wirkt, besteht grundsätzlich die Möglichkeit, dass sich der Deckel, insbesondere, wenn es sich um ein vergleichsweise dünnes Material bezogen auf den übrigen Kühlkörper handelt, nach oben hin wölbt. In der Regel kann der Deckel zum Beispiel aus einem flachen Blech gefertigt sein. In diesem Falle reicht es gegebenenfalls nicht aus, den Deckel an den Rändern des Kühlkörpers lediglich zu befestigen, wie dies insbesondere auch oft im Stand der Technik vorgesehen ist. Erfindungsgemäß ist der Deckel auf der Platte des Kühlkörpers durch Rührreibschweißen befestigt, um die mechanische Stabilität bei hohen Drücken der den Kanal durchströmenden Kühlflüssigkeit sowie ferner die mechanische Steifigkeit erhöhen zu können. Besonders bevorzugt ist eine Variante, bei welcher der Deckel auf der Platte des Kühlkörpers derartig befestigt ist, dass der wenigstens ein Kanal wenigstens teilweise, insbesondere vollständig vom Schweißpfad eingefasst ist. Dies bedeutet, dass bei parallel liegenden Kühlkanalabschnitten zwischen diesen in der Regel wenigstens teilweise auch ein Schweißpfad liegt.

Beim Rührreibschweißen wird im der Schweißstift des Schweißwerkzeugs gedreht bzw. in Rotation versetzt und dabei in das Material gepresst, bis die Schweißschulter auf dem Material aufsitzt. Während sich der Schweißstift weiterdreht, wird das Schweißwerkzeug entlang des zu schweißenden Schweißpfads geführt, wobei das Material in einen teigigen Zustand versetzt, also plastisch wird und bearbeitbar ist. Es entsteht ein feinkörniger Verbindungsbereich zwischen beiden Werkstücken, die miteinander zu verbinden sind. In vorteilhafter Weise erfolgt nur ein geringer Wärmeeintrag, sodass das Werkstück geschont wird, während jedoch hervorragende, sehr stabile Verbindungseigenschaften erzielt werden können.

Dementsprechend zeichnen sich ein erfindungsgemäßes Primärteil bzw. ein erfindungsgemäßer Linearmotor dadurch aus, dass eine entsprechende Motorkomponente gemäß der Erfindung bzw. bei einem Linearmotor ein entsprechendes Primärteil gemäß der Findung bzw. gemäß einem der Ausführungsbeispiele verwendet werden, sodass die bereits vorgenannten Vorteile erreicht werden können.

### Ausführungsbeispiel

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Figur 1:: ein schematischen Schnitt durch ein Primärteil eines Linearmotors gemäß der Erfindung (ohne Deckel),
- Figur 2:: eine schematische Darstellung des Primärteils aus Figur 1 (ohne Deckel), sowie
- Figur 3:: eine schematische Darstellung des Primärteils aus den Figuren 1, 2 mit Deckel.

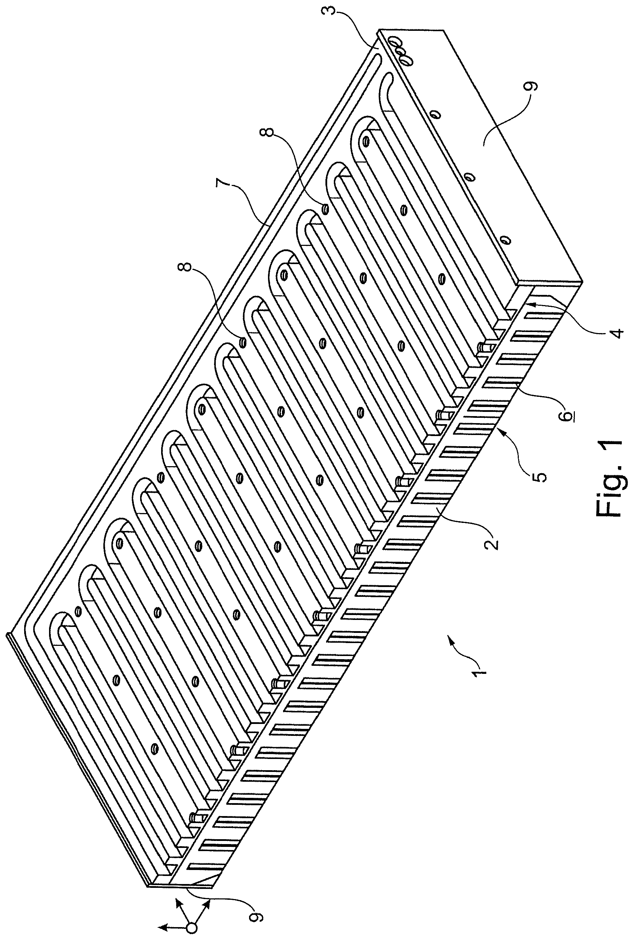

Figur 1 zeigt eine schematische Schnittdarstellung durch ein Primärteil 1 eines Linearmotors mit einem Blechpaket 2 und einem Kühlkörper 3. Beide, Blechpaket 2 und Kühlkörper 3 sind jeweils als Platten ausgebildet, die in Sandwichbauweise aufeinander geklebt wurden. Die Klebeschicht ist mit dem Bezugszeichen 4 bezeichnet: Im Blechpaket 2 befinden sich Nuten 5, welche wiederum mit Wicklungen 6 versehen sind. Im Kühlkörper 3 wiederum ist ein Kühlkanal 7 eingefräst, der einen im Wesentlichen mäandrierenden Verlauf aufweist und praktisch die gesamte Oberfläche des Kühlkörpers 3 durchsetzt. Zur Befestigung des Primärteils 1 sind im Kühlkörper Bohrungen 8 vorgesehen. An den Stirnflächen des Primärteils eins befinden sich jeweils Abschlussbleche 9, die jeweils einen Teil des Gehäuses des Motors bilden. Durch diese Bleche 9 können auch Leitungen zur Energieversorgung der Wicklungen 6 durchgeführt werden.

Die Wicklungen 6 können als orthozyklisch gewickelte Backlackspulen vorgesehen sein, beispielsweise mit einem Runddraht. Diese Maßnahme ermöglicht eine hohe Packungsdichte. Auch das Blechpaket 2 kann als Backlackpaket ausgebildet sein. Die Verwendung von Backlack für das Blechpaket 2 und die Wicklungen 6 ermöglichen es, eine hohe mechanische Steifigkeit zu erreichen.

In vorteilhafter Weise sind Blechpaket 2 und Kühlkörper 3 zu einem Teil vereint, wobei die Klebeschicht 4, durch welche beide miteinander verbunden sind, sehr dünn ausgebildet ist. Durch den großflächigen Auftrag des Klebers und die somit auch sehr groß gewählte Klebefläche wird ein hohes Maß an Stabilität dieser Verbindung zwischen Blechpaket 2 und Kühlkörper 3 erreicht. Darüber hinaus ermöglicht die Sandwichbauweise selbst wiederum ein hohes Maß an mechanischer Versteifung. Auch dann, wenn die entsprechenden Motorkomponenten hohen Kräften ausgesetzt sind, liegt dennoch eine besonders stabile Bauweise vor. Darüber hinaus liegt eine sehr kompakte Bauweise vor, die einerseits den zur Verfügung stehenden Raum möglichst gut ausnutzt und insgesamt daher in unterschiedliche Maschinen sehr gut integriert werden kann. Im vorliegenden Fall wirkt sich die kompakte Bauweise in der Regel auch positiv auf die mechanische Steifigkeit und Stabilität aus.

Wie ebenfalls aus Figur 1 hervorgeht, liegt die Ebene, in der die Nuten 5 angeordnet sind, parallel zu der Ebene, in der sich die Kühlkanäle 7 befinden. Die vorliegende Sandwichbauweise ermöglicht es, dass Kühlkanäle 7 und Nuten 5 in vergleichsweise geringem Abstand zueinander liegen. Der gesamte Bereich über der Fläche, in welcher die Nuten 5 angeordnet sind, ist im Wesentlichen gleichmäßig durch Kühlkanäle 7 durchsetzt. Aufgrund dessen kann auch eine besonders gute Wärmeabfuhr, auch durch die Klebeschicht 4, die ohnehin nur sehr dünn ausgebildet ist, erreicht werden. Die Kühloberfläche wird gewissermaßen maximiert. Durch die Ausbildung des Kühlkörpers 3 aus Aluminium wird wiederum ein hohes Maß an Wärmeleitfähigkeit erzielt. Der Abstand zu den Wicklungen 6, welche die Wärmequelle darstellen, wird möglichst gering gehalten. Die besonders gute Kühlung sorgt auch dafür, dass kein zu großer Wärmeübertrag auf weitere Komponenten der Maschine erfolgt, in welcher die Motorkomponente bzw. der entsprechende Linearmotor eingesetzt wird.

Die erzielten Vorteile, dass zum einen bei dem vorliegenden Ausführungsbeispiel der Erfindung eine hohe Packungsdichte vorliegt, zum anderen aber auch eine gute Wärmeabfuhr und Kühlung erreicht werden kann, führen dazu, dass die Dauerkraft des Motors im Vergleich zu herkömmlichen Linearmotoren aus dem Stand der Technik deutlich erhöht werden kann.

Das einfache Zusammenkleben von Kühlkörper 3 und Blechpaket 2 ermöglicht wiederum eine einfache Montage und eine kostengünstige Fertigung. Im Übrigen muss der Linearmotor nicht von Hand gefertigt werden, sondern eine zumindest teilautomatisierte Fertigung ist ebenfalls möglich.

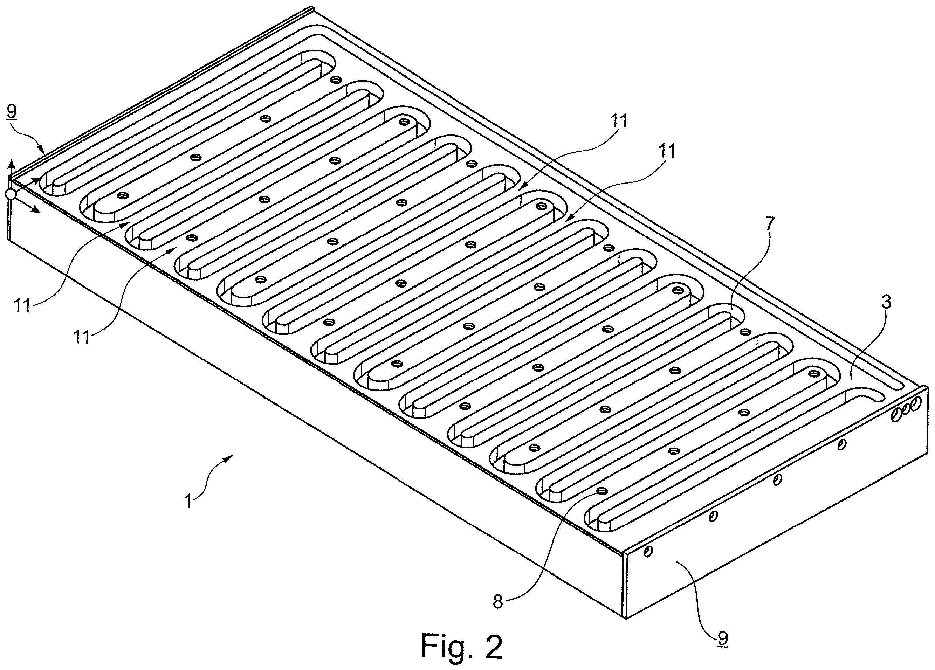

Die Darstellung gemäß Figur 2 zeigt noch einmal die gleiche Ansicht wie Figur 1, jedoch nicht als Schnittdarstellung. Hier ist der gesamte Verlauf der Kühlkanäle 7, insbesondere deren über die Oberfläche des Kühlkörpers 3 hinweg mäandrierender Verlauf sichtbar.

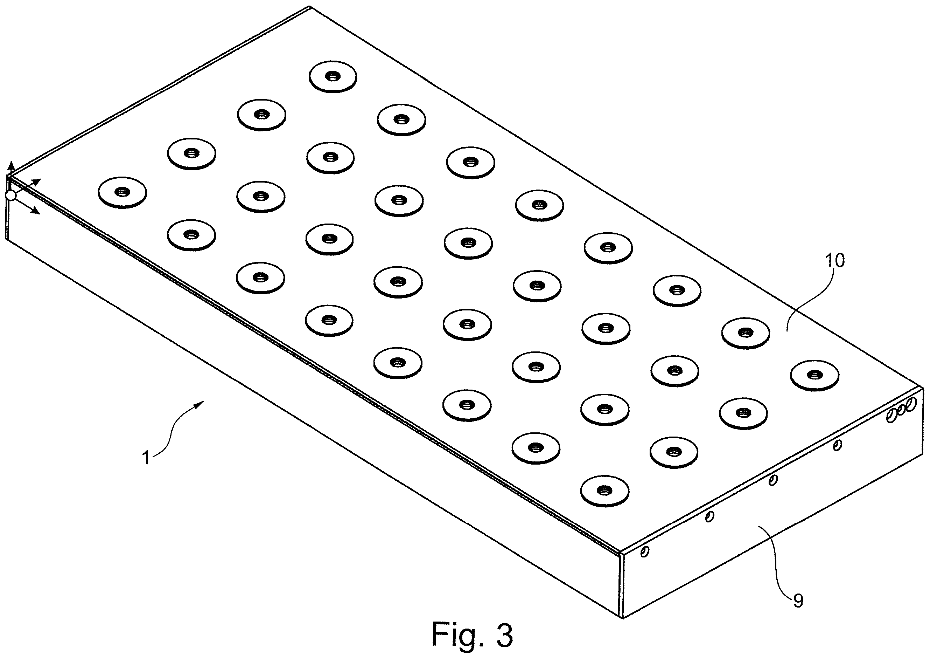

Auch in Figur 3 wiederum ist die gleiche Ansicht zu sehen, hier ist jedoch der Deckel 10 auf den Kühlkörper 3 aufgebracht. Der Deckel 10 wiederum verdeckt die Kühlkanäle 7 und dichtet diese in der Zeichnung nach oben hin ab. Um einen möglichst dichten Verlauf der Kühlkanäle 7 zu erreichen, ist der Deckel 10 durch Rührreibschweißen auf den Kühlkörper 3 aufgebracht und befestigt. Der Schweißpfad kann insbesondere zwischen den mäandrierenden Schlaufen der Kühlkanäle 7 angeordnet sein. Diese Bereiche sind in Figur 2 mit dem Bezugszeichen 11 beispielhaft gekennzeichnet. Der Prozess des Rührreibschweißens ermöglicht eine sehr feste und stabile stoffschlüssige Verbindung zwischen Deckel 10 und Kühlkörper 3, sodass die Kühlkanäle 7 auch unter hohen Drücken durch die Kühlflüssigkeit stehen können (etwa in der Größenordnung von 6 bar). Auf diese Weise wird auch eine hohe Biegesteifigkeit erzielt.

Allen Ausführungsbeispielen der Erfindung ist gemeinsam, dass der Kühlkörper mit dem Blechpaket verbunden und parallel zur Anordnung der Nuten angeordnet ist, wobei das Blechpaket und der Kühlkörper miteinander verklebt sind. Durch diese technische Maßnahme wird in überraschender Weise ein besonders stabiler Aufbau mit guter Wärmeabfuhr ermöglicht, weil allgemein eher zu erwarten wäre, dass bei den hohen Anziehungskräften, die auf ein Aktivteil eines Linearmotors wirken und in der Größenordnung von 20 kN bis 30 kN liegen, eine Klebeverbindung zu instabil wäre, wobei, wie sich im Zusammenhang mit der Erfindung herausstellt, jedoch das Gegenteil der Fall ist. Die besonders einfache Montage ermöglicht insbesondere aber auch eine Reduzierung der Montagezeit, die sich ebenfalls vorteilhaft auf die Montagekosten auswirkt. Darüber hinaus ermöglicht die Erfindung auch in überraschender Weise ein hohes Maß an Wirtschaftlichkeit und Kosteneinsparung bei der Fertigung, da im Gegensatz zum Stand der Technik Blechpaket, Kühlkörper usw. als Einzelkomponenten vergleichsweise günstig gefertigt werden können. Diese Kosteneinsparung kann auch bei einem Ausführungsbeispiel der Erfindung, bei dem der Deckel durch Rührreibschweißen mit dem Kühlkörper verbunden wird, die derzeit eventuell noch (durch das Rührreibschweißen) anfallenden höheren Kosten durchaus kompensieren.

### Bezugszeichenliste:

- 1: Primärteil
- 2: Blechpaket
- 3: Kühlkörper
- 4: Klebeschicht
- 5: Nuten
- 6: Wicklungen
- 7: Kühlkanal
- 8: Gewindebohrungen
- 9: Abschlussbleche
- 10: Deckel
- 11: Zwischenbereich für Schweißpfad

## Patentansprüche

1. Motorkomponente (1) für einen Linearmotor, insbesondere Primärteil und/oder Ständer, welche ein Blechpaket (2) und einen Kühlkörper (3) umfasst, wobei der Kühlkörper (3) eine Platte umfasst, wobei im Blechpaket (2) wenigstens zwei Nuten (5) angeordnet sind, um in den Nuten (5) angebrachten wenigstens zwei Wicklungen (6) und/oder wenigstens zwei Permanentmagneten anzubringen, wobei die Nuten (5) parallel in einer Ebene im Blechpaket (2) angeordnet sind, wobei der Kühlkörper (3) mit dem Blechpaket (2) verbunden und parallel zur Anordnung der Nuten (5) angeordnet ist, wobei das Blechpaket (2) und der Kühlkörper (3) miteinander verklebt sind, wobei das Blechpaket (2) und der Kühlkörper (3) in Sandwich-Bauweise miteinander verbunden sind, um die mechanische Steifigkeit erhöhen zu können, der Kühlkörper (3) wenigstens teilweise aus Aluminium gefertigt ist, wobei die Platte des Kühlkörpers (3) aus Aluminium gefertigt ist, wobei der Kühlkörper (3) wenigstens einen Kanal (7) zur Leitung von Kühlflüssigkeit aufweist,
wobei der wenigstens eine Kanal (7) in die Platte gefräst ist, insbesondere parallel zur Ebene, in der die Nuten (5) angeordnet sind,
wobei ein Deckel (10), insbesondere aus Aluminium, zur Abdeckung des wenigstens einen Kanals (7) vorgesehen ist, wobei der Deckel (10) auf der Platte des Kühlkörpers (3) durch Rührreibschweißen befestigt ist, um die mechanische Stabilität beim Durchströmen der Kühlflüssigkeit und/oder die mechanische Steifigkeit erhöhen zu können.

2. Motorkomponente (1) nach einem der vorgenannten Ansprüche, **dadurch gekennzeichnet, dass** das Blechpaket (2) und/oder der Kühlkörper (3) als Platte ausgebildet sind.

3. Motorkomponente (1) nach einem der vorgenannten Ansprüche, **dadurch gekennzeichnet, dass** das Blechpaket (2) als Backlackblechpaket ausgebildet ist, um die mechanische Steifigkeit erhöhen zu können.

4. Motorkomponente (1) nach einem der vorgenannten Ansprüche, **dadurch gekennzeichnet, dass** in den Nuten (5) wenigstens eine Backlackwicklung (6) angeordnet ist, welche vergossen ist, um die mechanische Steifigkeit erhöhen zu können.

5. Motorkomponente (1) nach einem der vorgenannten Ansprüche, **dadurch gekennzeichnet, dass** die Backlackwicklung (6) als orthozyklisch gewickelte Backlackspule mit Runddraht ausgebildet ist.

6. Motorkomponente (1) nach einem der vorgenannten Ansprüche, **dadurch gekennzeichnet, dass** das Blechpaket (2) und der Kühlkörper (3) durch einen temperaturbeständigen Kleber miteinander verklebt sind, vorzugsweise mit 2-Komponenten-Kleber auf Epoxydharzbasis, wobei die Klebeschicht (4) besonders bevorzugt eine Dicke von maximal 0,25 mm aufweist.

7. Motorkomponente (1) nach einem der vorgenannten Ansprüche, **dadurch gekennzeichnet, dass** der Deckel (10) auf der Platte des Kühlkörpers (3) derart befestigt ist, dass der wenigstens eine Kanal (7) wenigstens teilweise, insbesondere vollständig vom Schweißpfad eingefasst ist.

8. Primärteil (1) für einen Linearmotor, insbesondere Ständer, **dadurch gekennzeichnet, dass** eine Motorkomponente nach einem der vorgenannten Ansprüche vorgesehen ist.

9. Linearmotor mit einer Motorkomponente (1) nach einem der vorgenannten Ansprüche und/oder mit einem Primärteil nach einem der vorgenannten Ansprüche sowie einem Sekundärteil, insbesondere einem Läufer als bewegbarem Teil.

## Claims

1. Motor component (1) for a linear motor, in particular a primary part and/or stator, said component including a laminated core (2) and a heat sink (3), wherein the heat sink (3) includes a plate, wherein at least two grooves (5) have been arranged in the laminated core (2), in order to attach at least two windings (6) and/or at least two permanent magnets attached in the grooves (5), wherein the grooves (5) have been arranged in parallel in a plane in the laminated core (2), wherein the heat sink (3) has been connected to the laminated core (2) and arranged parallel to the arrangement of the grooves (5), wherein the laminated core (2) and the heat sink (3) have been adhesively bonded to one another, wherein the laminated core (2) and the heat sink (3) have been connected to one another in a sandwich style of construction, in order to be able to increase the mechanical rigidity, the heat sink (3) has been at least partially manufactured from aluminum, wherein the plate of the heat sink (3) has been manufactured from aluminum,
wherein the heat sink (3) exhibits at least one duct (7) for conducting cooling liquid,
wherein the at least one duct (7) has been milled into the plate, in particular parallel to the plane in which the grooves (5) have been arranged,
wherein a cover (10), in particular made of aluminum, has been provided for covering up the at least one duct (7),
wherein the cover (10) has been fastened to the plate of the heat sink (3) by friction stir welding, in order to be able to increase the mechanical stability, when the cooling liquid is flowing through, and/or the mechanical rigidity.

2. Motor component (1) according to one of the preceding claims, **characterized in that** the laminated core (2) and/or the heat sink (3) take(s) the form of a plate.

3. Motor component (1) according to one of the preceding claims, **characterized in that** the laminated core (2) takes the form of a baked-lacquer laminated core, in order to be able to increase the mechanical rigidity.

4. Motor component (1) according to one of the preceding claims, **characterized in that** at least one baked-lacquer winding (6) has been arranged in the grooves (5), said winding having been potted, in order to be able to increase the mechanical rigidity.

5. Motor component (1) according to one of the preceding claims, **characterized in that** the baked-lacquer winding (6) takes the form of an orthocyclically wound baked-lacquer coil with round wire.

6. Motor component (1) according to one of the preceding claims, **characterized in that** the laminated core (2) and the heat sink (3) have been adhesively bonded to one another by means of a temperature-resistant adhesive, preferentially by means of a 2-component adhesive based on epoxy resin, said adhesive layer (4) particularly preferably having a thickness of at most 0.25 mm.

7. Motor component (1) according to one of the preceding claims, **characterized in that** the cover (10) has been fastened to the plate of the heat sink (3) in such a manner that the at least one duct (7) has been surrounded at least partially, in particular completely, by the welding path.

8. Primary part (1) for a linear motor, in particular a stator, **characterized in that** a motor component according to one of the preceding claims has been provided.

9. Linear motor with a motor component (1) according to one of the preceding claims and/or with a primary part according to one of the preceding claims and also with a secondary part, in particular a rotor as a movable part.

## Revendications

1. Composant de moteur (1) pour un moteur linéaire, en particulier partie primaire et/ou stator, qui comprend un noyau feuilleté (2) et un corps de refroidissement (3), le corps de refroidissement (3) comprenant une plaque, au moins deux rainures (5) étant agencées dans le noyau feuilleté (2), pour monter dans les rainures (5) au moins deux enroulements (6) et/ou au moins deux aimants permanents, les rainures (5) étant agencées parallèlement dans un plan dans le noyau feuilleté (2), le corps de refroidissement (3) étant relié au noyau feuilleté (2) et agencé parallèlement à l'agencement des rainures (5), le noyau feuilleté (2) et le corps de refroidissement (3) étant collés l'un à l'autre, le noyau feuilleté (2) et le corps de refroidissement (3) étant reliés l'un à l'autre selon une construction sandwich afin de pouvoir augmenter la rigidité mécanique, le corps de refroidissement (3) étant fabriqué au moins partiellement en aluminium, la plaque du corps de refroidissement (3) étant fabriquée en aluminium, le corps de refroidissement (3) présentant au moins un canal (7) pour la conduite du liquide de refroidissement,
ledit au moins un canal (7) étant fraisé dans la plaque, en particulier parallèlement au plan dans lequel les rainures (5) sont agencées,
un couvercle (10), notamment en aluminium, étant prévu pour recouvrir ledit au moins un canal (7), ledit couvercle (10) étant fixé sur la plaque du corps de refroidissement (3) par soudage par friction-malaxage, afin de pouvoir augmenter la stabilité mécanique lors du passage du liquide de refroidissement et/ou la rigidité mécanique.

2. Composant de moteur (1) selon l'une des revendications précédentes, **caractérisé en ce que** le noyau feuilleté (2) et/ou le corps de refroidissement (3) sont réalisés sous forme de plaque.

3. Composant de moteur (1) selon l'une des revendications précédentes, **caractérisé en ce que** le noyau feuilleté (2) est conçu sous la forme d'un noyau feuilleté de vernis à cuire afin de pouvoir augmenter la rigidité mécanique.

4. Composant de moteur (1) selon l'une des revendications précédentes, **caractérisé en ce qu'**au moins un enroulement (6) de vernis à cuire est agencé dans les rainures (5), lequel est coulé afin de pouvoir augmenter la rigidité mécanique.

5. Composant de moteur (1) selon l'une des revendications précédentes, **caractérisé en ce que** l'enroulement (6) de vernis à cuire est conçu sous la forme d'une bobine de vernis à cuire enroulée de manière orthocyclique avec un fil rond.

6. Composant de moteur (1) selon l'une des revendications précédentes, **caractérisé en ce que** le noyau feuilleté (2) et le corps de refroidissement (3) sont collés l'un à l'autre au moyen d'une colle résistante à la température, de préférence avec une colle à deux composants à base de résine époxy, la couche de colle (4) présentant de manière particulièrement préférée une épaisseur maximale de 0,25 mm.

7. Composant de moteur (1) selon l'une des revendications précédentes, **caractérisé en ce que** le couvercle (10) est fixé sur la plaque du corps de refroidissement (3) de telle sorte que ledit au moins un canal (7) est au moins partiellement, en particulier entièrement, bordé par le chemin de soudage.

8. Pièce primaire (1) pour un moteur linéaire, en particulier un stator, **caractérisée en ce qu'**il est prévu un composant de moteur selon l'une des revendications précitées.

9. Moteur linéaire avec un composant de moteur (1) selon l'une des revendications précédentes et/ou avec une partie primaire selon l'une des revendications précédentes ainsi qu'une partie secondaire, en particulier un rotor en tant que partie mobile.
